# EUROPÄISCHE PATENTSCHRIFT

(11) **EP 3 323 168 B1**
(45) Veröffentlichungstag und Bekanntmachung des Hinweises auf die Patenterteilung: **29.04.2020**
(21) Anmeldenummer: 16745404.0
(22) Anmeldetag: 29.06.2016
(51) Int. Cl.: H01M 8/1226, H01M 8/0206, H01M 8/0232, H01M 8/0271, H01M 8/0273, H01M 8/0286, H01M 8/124, H01M 8/021, C22C 38/00, C22C 38/04, C22C 38/06, C22C 38/44, C22C 38/48, C22C 38/50

(54) **ELEKTROCHEMISCHES MODUL**
ELECTROCHEMICAL MODULE
MODULE ÉLECTROCHIMIQUE

(30) Priorität: 14.07.2015 AT 2092015 U
(43) Veröffentlichungstag der Anmeldung: 23.05.2018
(73) Patentinhaber: Plansee SE, 6600 Reutte (AT)
(72) Erfinder: SCHAFBAUER, Wolfgang, 6600 Lechaschau (AT); KÖGL, Markus, 6682 Vils (AT); RÜTTINGER, Matthias, 6600 Reutte (AT); BIENERT, Christian, 6600 Reutte (AT); BRANDNER, Marco, 87448 Waltenhofen (DE)
(74) Vertreter: Ciesla, Bettina
(86) Internationale Anmeldenummer: PCT/AT2016/000073
(87) Internationale Veröffentlichungsnummer: WO 2017/008093

(56) Entgegenhaltungen:
- WO-A1-2014/187534
- DE-A1- 10 343 652
- DE-A1-102007 024 227

## Beschreibung

Die vorliegende Erfindung betrifft ein elektrochemisches Modul, insbesondere ein Brennstoffzellenmodul, das ein poröses, plattenförmiges, metallisches Trägersubstrat aufweisend einen gasdurchlässigen, zentralen Bereich und einen den zentralen Bereich umgebenden Randbereich, einen in dem zentralen Bereich auf einer ersten Seite des Trägersubstrats angeordneten Schichtaufbau mit mindestens einer elektrochemisch aktiven Schicht, mindestens ein metallisches, gasdichtes Gehäuseteil, das mit dem Randbereich des Trägersubstrats über eine Schweißverbindung verbunden ist, und eine sich von dem Schichtaufbau bis zu dem gasdichten Gehäuseteil erstreckende, gasdichte Zone aufweist.

Das erfindungsgemäße elektrochemische Modul ist unter anderem als Hochtemperatur-Brennstoffzelle bzw. Festoxidbrennstoffzelle (SOFC; solid oxide fuel cell), als Festoxid-Elektrolyse-Zelle (SOEC; solid oxide electrolyzer cell) sowie als reversible Festoxidbrennstoffzelle (R-SOFC) einsetzbar. Für die vergleichsweise dünn ausgebildeten Schichten des Schichtaufbaus wird eine mechanisch tragende Komponente benötigt, die beispielsweise durch eine der elektrochemisch aktiven Schichten des Schichtaufbaus, wie z.B. durch einen Elektrolyt, eine Anode oder eine Kathode der funktionalen Schichten, die dann jeweils entsprechend dick ausgebildet sind, oder durch eine von diesen funktionalen Schichten separat ausgebildete Komponente, wie z.B. durch ein keramisches oder metallisches Trägersubstrat, gebildet werden kann. Die vorliegende Erfindung betrifft letzteres Konzept mit einem separat ausgebildeten, metallischen Trägersubstrat, das die tragende Funktion für die Schichten des Schichtaufbaus bildet. Derartige Metallsubstrat-gestützte Systeme (MSC; metal supported cell) sind hinsichtlich der thermischen und redox Zyklierbarkeit sowie hinsichtlich der mechanischen Stabilität vorteilhaft. Indem bei MSCs der Elektrolyt, dessen elektrischer Widerstand mit abnehmender Dicke und mit zunehmender Temperatur sinkt, vergleichsweise dünn ausgebildet werden kann (z.B. mit einer Dicke im Bereich von 2 bis 10 µm, bevorzugt im Bereich von 3 bis 5 µm), können MSCs bei einer vergleichsweise niedrigen Betriebstemperatur von ca. 600°C bis 800°C betrieben werden (während SOFCs zum Teil bei Betriebstemperaturen von bis zu 1.000 °C betrieben werden). Aufgrund ihrer spezifischen Vorteile sind MSCs insbesondere für mobile Anwendungen, wie beispielsweise zur elektrischen Versorgung von Personenkraftwagen oder Nutzfahrzeugen (APU - auxiliary power unit) geeignet.

Im Vergleich zu vollkeramischen Systemen zeichnen sich diese metallischkeramischen MSC-Systeme (d.h. metallisches Trägersubstrat mit zumindest anteilig keramischem Schichtaufbau) durch deutlich reduzierte Materialkosten sowie durch neue Möglichkeiten der Stackintegration aus, indem das metallische Trägersubstrat eine Anbindung mittels Löt- und Schweißprozessen, bei denen es sich um kostengünstige und langzeitbeständige Verbindungstechniken handelt, ermöglicht. Im Rahmen der Stackintegration müssen die einzelnen Metallsubstrat-gestützten Zellen nämlich mit entsprechenden (metallischen) Gehäuseteilen (z.B. Rahmenblech, Interkonnektor, etc.) verbunden werden, in einem Stack (Stapel) übereinander angeordnet sowie elektrisch in Serie miteinander verbunden werden. Die Gehäuseteile bewerkstelligen bei den einzelnen Zellen des Stacks die jeweils voneinander getrennte Gaszuführung der Prozessgase, was im Falle einer Brennstoffzelle die Zuführung des Brennstoffs zu der Anode und des Oxidationsmittels zu der Kathode bedeutet, und die Ableitung der bei der elektrochemischen Reaktion entstehenden Gase. Ferner erfolgt über diese Gehäuseteile die elektrische Verbindung der einzelnen Zellen eines Stacks miteinander in Serie.

Für die Funktionsweise wesentlich ist bei den einzelnen Zellen die zuverlässige, gasdichte Trennung der beiden Prozessgasräume, die bezogen auf eine Zelle auf den beiden Seiten des Elektrolyten ausgebildet sind. Eine hohe Herausforderung stellt insbesondere die Anbindung der Metallsubstrat-gestützten Zelle an das/die angrenzende(n) Gehäuseteil(e) dar, denn der Übergangsbereich von dem Schichtaufbau, in dessen Bereich der Elektrolyt die Prozessgastrennung bewerkstelligt, bis zu dem/den angrenzende(n) Gehäuseteil(en) ist (zumindest für die Prozessgase und die entstehenden Gase) gasdicht auszubilden und diese Gasdichtheit muss über lange Einsatzdauern bei auftretenden, mechanischen Belastungen und Temperaturschwankungen gewährleistet sein.

Aus der EP 2 174 371 B1 ist ein Verfahren zur Herstellung einer Brennstoffzelle bekannt, bei welcher ein metallisches Trägersubtrat mit im Randbereich vorgesehenen Gasdurchtrittsöffnungen dadurch erhalten wird, dass ein planarer, poröser Körper pulvermetallurgisch hergestellt wird, der Randbereich des Körpers durch uniaxiales Pressen oder Walzen bis zur Gasdichte verdichtet und mit Gasdurchtrittsöffnungen versehen wird. In dem zentralen, porösen Bereich des metallischen Trägersubstrats wird der Schichtaufbau mit elektrochemisch aktiven Schichten aufgebracht. In der EP 1 278 259 B1 ist eine Anordnung beschrieben, bei der ein metallisches Trägersubstrat gasdurchlässig ausgebildet ist und eine gasdichte Zone aufweist, die sich durch die gesamte Dicke des Substrats hindurch erstreckt und durch Schweißen und/oder Löten an einem Gehäuse festgelegt ist. Weitere aus dem Stand der Technik bekannte elektrochemische Module sind in den Druckschriften DE 10 2007 024227 A1, DE 103 43 652 A1 und WO 2014/187534 A1 offenbart.

Dementsprechend besteht die Aufgabe der vorliegenden Erfindung in der kostengünstigen Bereitstellung eines elektrochemischen Moduls mit einem metallischen Trägersubstrat und einem in einem zentralen, porösen Bereich des Trägersubstrats angeordneten Schichtaufbau mit mindestens einer elektrochemisch aktiven Schicht, wobei ein Übergangsbereich zwischen dem Schichtaufbau und einem an das Trägersubstrat angrenzenden Gehäuseteil zumindest für die Prozessgase und die entstehenden Gase gasdicht ausgebildet ist und diese Gasdichtheit über lange Einsatzdauern auch bei mechanischen Belastungen und Temperaturschwankungen gewährleistet wird. Die Aufgabe wird gelöst durch ein elektrochemisches Modul gemäß Anspruch 1 sowie durch ein Verfahren zum Herstellen eines elektrochemischen Moduls gemäß Anspruch 15. Vorteilhafte Weiterbildungen der Erfindung sind in den abhängigen Ansprüchen angegeben.

Gemäß der vorliegenden Erfindung weist das elektrochemische Modul ein poröses, plattenförmiges, metallisches Trägersubstrat, das (bezogen auf dessen Haupterstreckungsebene) einen gasdurchlässigen, zentralen Bereich und einem den zentralen Bereich umgebenden Randbereich aufweist, einen in dem zentralen Bereich auf einer ersten Seite des Trägersubstrats angeordneten Schichtaufbau mit mindestens einer, insbesondere mindestens zwei elektrochemisch aktiven Schicht(en), mindestens ein metallisches, gasdichtes Gehäuseteil, das mit dem Randbereich des Trägersubstrats über eine Schweißverbindung verbunden ist, und eine sich von dem Schichtaufbau (zumindest) bis zu dem gasdichten Gehäuseteil erstreckende, gasdichte Zone auf. Die gasdichte Zone weist dabei einen gasdichten Oberflächenabschnitt, der sich von dem Schichtaufbau oberflächlich auf der ersten (d.h. der dem Schichtaufbau zugewandten) Seite des Trägersubstrats (zumindest) bis zu der Schweißverbindung erstreckt, und die Schweißverbindung, durch die der gasdichte Oberflächenabschnitt mit dem Gehäuseteil gasdicht verbunden wird und deren Schweißzone sich ausgehend von der ersten Seite in Dickenrichtung zu einer gegenüberliegenden, zweiten Seite des Trägersubstrats nur durch einen Teil der Dicke des Trägersubstrats erstreckt, auf.

Indem sich erfindungsgemäß die gasdichte Zone nur oberflächlich auf der ersten Seite des Trägersubstrats erstreckt, ist es gemäß der vorliegenden Erfindung möglich, ein pulvermetallurgisch in einem Teil hergestelltes Trägersubstrat, das im Randbereich nicht bis zur Gasdichtheit zu verpressen ist, zu verwenden. Gerade bei schwer pressbaren Materialien, wie sie Chrombasierte oder zu einem erheblichen Anteil Chrom enthaltende Legierungen bilden, sind dadurch deutlich geringere Pressdrücke erforderlich, wodurch Herstellungskosten eingespart sowie der Ausschussanteil reduziert werden. Weiterhin werden entlang der Haupterstreckungsebene des Trägersubstrats konstantere Materialeigenschaften erzielt, wodurch das Risiko von Rissbildung und Verzug, insbesondere bei hohen Temperaturänderungen und/oder mechanischen Belastungen, reduziert wird. Indem sich die Schweißzone ausgehend von der ersten Seite nur durch einen Teil der Dicke des Trägersubstrats erstreckt, wird auch durch die Schweißverbindung nur eine vergleichsweise geringfügige Änderung der Materialeigenschaften innerhalb des Trägersubstrats herbeigeführt. Dementsprechend wird sichergestellt, dass die durch den pulvermetallurgischen Herstellungsprozess erhaltenen, vorteilhaften Materialeigenschaften des Trägersubstrats weitgehend erhalten bleiben. Würde sich demgegenüber die (gasdicht ausgebildete) Schweißzone durch die gesamte Dicke des Trägersubstrats hindurch erstrecken, so wäre beim Schweißen des Trägersubstrats aufgrund der relativ großen, notwendigen Schweißzone ein deutlich höherer Energieeintrag erforderlich. Eine derartige Ausgestaltung würde nicht nur zu erhöhten Herstellungskosten, sondern auch zu einem höheren Verzug der Bauteile, einer Kornvergröberung in der Mikrostruktur der an die Schweißzone angrenzenden Bereiche, die sich nachteilig auf die Materialeigenschaften auswirkt, sowie zu dem Risiko einer Rissbildung oder sogar eines Bruchs bei mechanischer und/oder thermischer Belastung in dem Bereich der Schweißzone führen.

Neben der bevorzugten Anwendung als Hochtemperatur-Brennstoffzelle bzw. Festoxidbrennstoffzelle (SOFC; solid oxide fuel cell) ist das erfindungsgemäße, elektrochemische Modul auch als Festoxid-Elektrolyse-Zelle (SOEC; solid oxide electrolyzer cell) sowie als reversible Festoxidbrennstoffzelle (R-SOFC) einsetzbar. Im Folgenden wird auf den Aufbau und die Funktionsweise von Metallsubstrat-gestützten Hochtemperatur-Brennstoffzellen (SOFCs), wie sie mit dem erfindungsgemäßen, elektrochemischen Modul realisierbar sind, eingegangen. Solche Metallsubstrat-gestützten SOFCs bilden die bevorzugte Anwendung für das erfindungsgemäße, elektrochemische Modul. Eine Metallsubstrat-gestützte Zelle (MSC) besteht aus einem porösen, plattenförmigen, metallischen Trägersubstrat mit einer bevorzugten Dicke im Bereich von 170 µm bis 1,5 mm, insbesondere im Bereich von 250 µm bis 800 µm, auf das in einem gasdurchlässigen, zentralen Bereich ein Schichtaufbau mit der Anode, Elektrolyt und Kathode als elektrochemisch aktiven Schichten sowie ggf. mit weiteren Schichten (z.B. Diffusionsbarrieren aus z.B. Cer-Gadolinium-Oxid oder Lanthan-Chrom-Oxid, etc., zwischen Trägersubstrat und Anode, Diffusionsbarriere aus z.B. Cer-Gadolinium-Oxid zwischen Elektrolyt und Kathode) aufgebracht ist. Bei dem erfindungsgemäßen, elektrochemischen Modul müssen dabei noch nicht alle elektrochemisch aktiven Schichten aufgebracht sein, vielmehr kann der Schichtaufbau auch nur eine elektrochemisch aktive Schicht (z.B. die Anode), vorzugsweise zwei elektrochemisch aktive Schichten (z.B. Anode und Elektrolyt), aufweisen, und die weiteren Schichten, insbesondere diejenigen zur Vervollständigung einer elektrochemischen Zelle, werden erst nachträglich aufgebracht. Die Aufbringung der Schichten des Schichtstapels erfolgt vorzugsweise mittels PVD (PVD: Physikalische Dampfphasenabscheidung), z.B. Sputtern, und/oder thermischen Beschichtungsverfahren, z.B. Flammspritzen oder Plasmaspritzen und/oder nasschemische Verfahren, wie z.B. Siebdruck, Nasspulverbeschichten, etc., wobei für die Realisierung des gesamten Schichtaufbaus einer elektrochemischen Zelle auch mehrere dieser Verfahren in Kombination eingesetzt werden können. Vorzugsweise ist die Anode die auf das Trägersubstrat nächstfolgende, elektrochemisch aktive Schicht, während die Kathode auf der dem Trägersubstrat abgewandten Seite des Elektrolyten ausgebildet ist. Alternativ ist aber auch eine umgekehrte Anordnung der beiden Elektroden möglich.

Sowohl die Anode (z.B. gebildet aus einem Komposit bestehend aus Nickel und mit Yttriumoxid vollstabilisiertem Zirkoniumdioxid) als auch die Kathode (z.B. gebildet aus gemischtleitenden Perovskiten wie (La,Sr)(Co,Fe)O₃) sind gasdurchlässig ausgebildet. Zwischen Anode und Kathode ist ein gasdichter Feststoffelektrolyt aus einem festen, keramischen Werkstoff aus Metalloxid (z.B. aus Yttriumoxid vollstabilisierten Zirkoniumdioxid), der für Sauerstoffionen leitfähig ist, nicht aber für Elektronen, ausgebildet. Alternativ kann der Feststoffelektrolyt auch für Protonen, nicht aber für Elektronen leitfähig sein, wobei dies die jüngere Generation von SOFCs betrifft (z.B. Feststoffelektrolyt aus Metalloxid, insbesondere aus Barium-Zirkonium-Oxid, Barium-Cer-Oxid, Lanthan-Wolfram-Oxid oder Lanthan-Niob-Oxid). Im Betrieb der SOFC wird der Anode Brennstoff (beispielsweise Wasserstoff oder herkömmliche Kohlenwasserstoffe, wie Methan, Erdgas, Biogas, etc., ggf. vollständig oder teilweise vorreformiert) zugeführt und dort katalytisch unter Abgabe von Elektronen oxidiert. Die Elektronen werden aus der Brennstoffzelle abgeleitet und fließen über einen elektrischen Verbraucher zur Kathode. An der Kathode wird ein Oxidationsmittel (beispielsweise Sauerstoff oder Luft) durch Aufnahme der Elektronen reduziert. Der elektrische Kreislauf schließt sich, indem bei einem für Sauerstoffionen leitfähigen Elektrolyten die an der Kathode entstehenden Sauerstoffionen über den Elektrolyten zu der Anode fließen und an den entsprechenden Grenzflächen mit dem Brennstoff reagieren.

Bei einer Festoxid-Elektrolyse-Zelle (SOEC), bei der unter Einsatz von elektrischem Strom eine Redoxreaktion erzwungen wird, wie beispielsweise eine Umwandlung von Wasser in Wasserstoff und Sauerstoff, ist die Metallsubstrat-gestützte Zelle (MSC) entsprechend dem oberhalb erläuterten Aufbau ausgebildet. Dabei entspricht die Schicht, die oberhalb in Bezug auf die SOFC als Anode beschrieben wurde, der Kathode und umgekehrt. Eine reversible Festoxidbrennstoffzelle (R-SOFC) ist sowohl als SOEC als auch als SOFC betreibbar.

"Gasdicht" bedeutet in dem vorliegenden Zusammenhang insbesondere, dass die Leckrate bei ausreichender Gasdichtigkeit standardmäßig < 10⁻³ hPa*dm³ /cm² s (hPa: Hektopascal, dm³: Kubikdezimeter, cm²: Quadratzentimeter, s: Sekunde) beträgt (gemessen unter Luft mit Druckanstiegsmethode mit dem Messgerät der Firma Dr. Wiesner, Remscheid, Typ: Integra DDV bei einer Druckdifferenz dp = 100 hPa). Eine derartige Gasdichtheit wird insbesondere im Bereich der gasdichten Zone und im Bereich des Schichtaufbaus realisiert.

Der Randbereich ist insbesondere umlaufend um den gasdurchlässigen, zentralen Bereich angeordnet. Das mindestens eine Gehäuseteil, das z.B. als Blechteil aus hochchromhaltigen Stählen (z.B. auf dem Markt erhältlich unter den Bezeichnungen Crofer® 22 H, Crofer® 22 APU, ZMG® 232L) ausgebildet sein kann, erstreckt sich vorzugsweise ebenfalls umlaufend um den Randbereich und ist um den gesamten Umfang des Randbereichs mit diesem über die Schweißverbindung verbunden. Die aus einem Schmelzgefüge gebildete Schweißzone, die sich erfindungsgemäß nur durch einen Teil der Dicke des Trägersubstrats erstreckt, ist z.B. anhand eines Schliffbildes, das im Querschnitt durch die Schweißverbindung angefertigt wird, unter einem Lichtmikroskop oder unter einem Rasterelektronenmikroskop erkennbar.

Gemäß einer Weiterbildung sind der zentrale Bereich und der Randbereich monolithisch, d.h. aus einem Stück, ausgebildet, worunter verstanden wird, dass es sich nicht um mehrere, ggf. auch durch eine stoffschlüssige Verbindung (z.B. Löten, Schweißen, etc.) miteinander verbundene Bauteile handelt. Gemäß einer Weiterbildung ist das Trägersubstrat aus einer auf Cr (Chrom) und/oder Fe (Eisen) basierten Materialkombination, d.h. der Cr- und Fe-Anteil betragen in Summe mindestens 50 Gew.%, pulvermetallurgisch in einem Stück hergestellt. Die pulvermetallurgische und einstückige Herstellung ist anhand der Mikrostruktur des Trägersubstrats erkennbar, das unterhalb der gasdichten Zone über dessen gesamte Haupterstreckungsebene hinweg eine typische Sinterstruktur, bei der die Einzelkörner je nach Sintergrad über mehr oder weniger ausgeprägte Sinterhälse miteinander verbunden sind, aufweist. Insbesondere ist der Cr- und Fe-Anteil in Summe mindestens 80 Gew.%, vorzugsweise mindestens 90 Gew.%. Das Trägersubstrat kann insbesondere gemäß AT 008 975 U1 herstellt sein, es kann daher aus einer Fe-Basis Legierung mit Fe >50 Gew. % und 15 bis 35 Gew. % Cr, 0,01 bis 2 Gew. % eines oder mehrerer Elemente der Gruppe Ti (Titan), Zr (Zirconium), Hf (Hafnium), Mn (Mangan), Y (Yttrium), Sc (Scandium), Seltenerdmetalle; 0 bis 10 Gew. % Mo (Molybdän) und/oder Al (Aluminium); 0 bis 5 Gew. % eines oder mehrerer Metalle der Gruppe Ni (Nickel), W (Wolfram), Nb (Niobium), Ta (Tantal); 0,1 bis 1 Gew. % O (Sauerstoff); Rest Fe und Verunreinigungen bestehen, wobei zumindest ein Metall der Gruppe Y,Sc, Seltenerdmetalle und zumindest ein Metall der Gruppe Cr, Ti, Al, Mn ein Mischoxid bilden. Zur Bildung des Trägersubstrats wird vorzugsweise eine Pulverfraktion mit einer Partikelgröße <150µm, insbesondere <100µm verwendet. So kann die Oberflächenrauhigkeit ausreichend klein gehalten werden, um eine gute Beschichtbarkeit für funktionale Schichten zu gewährleisten. Ferner ist die Partikelgröße umso kleiner zu wählen, je dünner das Trägersubstrat auszubilden ist. Nach dem Sinterprozess weist das poröse Substrat eine Porosität von vorzugsweise 20 bis 60%, insbesondere 40 bis 50% auf. Vorzugsweise weist es eine Dicke im Bereich von 170 µm bis 1,5 mm, insbesondere im Bereich von 250 µm bis 800 µm, auf.

Gemäß einer Weiterbildung ist das Trägersubstrat unterhalb (d.h. in Richtung zu der zweiten Seite hin) des gasdichten Oberflächenabschnitts und unterhalb der Schweißzone der Schweißverbindung porös ausgebildet. Insbesondere ist es in diesem porösen Abschnitt noch gasdurchlässig. Auf diese Weise werden weitgehend gleiche Materialeigenschaften des Trägersubstrats von dem zwingend gasdurchlässig auszubildenden, porösen, zentralen Bereich bis einschließlich zu seinem Randbereich erzielt. Ferner wird ein unstetiger Übergang, der das Risiko von Materialschwächen und Materialermüdung, wie Rissbildung, etc. birgt, vermieden. Bei einem pulvermetallurgisch hergestellten Trägersubstrat ist es folglich nicht erforderlich, den Randbereich im Vollmaterial gasdicht zu verpressen, was angesichts der schwierigen Press- und Verarbeitbarkeit von Cr-enthaltenden Pulvern von Vorteil ist. Gemäß einer Weiterbildung weist das Trägersubstrat in dem porösen Abschnitt des Randbereichs (d.h. ausgenommen die Bereiche der gasdichten Zone) eine Porosität auf, die gegenüber der Porosität des zentralen Bereichs reduziert ist. Bei einem pulvermetallurgisch hergestellten Trägersubstrat kann dies beispielsweise durch Verdichten des Randbereichs, insbesondere durch uniaxiales Pressen oder Profilwalzen, erfolgen. Vorzugsweise wird beim Verdichtungsprozess ein kontinuierlicher Übergang zwischen dem zentralen Bereich und dem Randbereich hergestellt, wodurch das Auftreten von Spannungen im Trägersubstrat vermieden wird. Eine solche reduzierte Porosität, die mit einer erhöhten Dichte einhergeht, ist vorteilhaft für die Ausbildung des gasdichten Oberflächenabschnitts. Wird dieser z.B. durch eine aufzubringende Deckschicht gebildet, wird durch die reduzierte Porosität deren gasdichte Ausbildung ermöglicht und ihre Haftung verbessert. Wird der Oberflächenabschnitt hingegen durch ein oberflächliches Aufschmelzen hergestellt, wird durch die reduzierte Porosität die lokal auftretende Volumenänderung gering gehalten. Gemäß einer Weiterbildung weist das Trägersubstrat in dem porösen Abschnitt des Randbereichs eine Porosität in dem Bereich von einschließlich 3% bis einschließlich 20% auf, vorzugsweise in dem Bereich von einschließlich 4% bis einschließlich 12%. Innerhalb dieser Porositätsbereiche ist in der Regel noch keine Gasdichtheit gegeben.

Gemäß einer Weiterbildung erstreckt sich die Schweißzone von der ersten Seite in Dickenrichtung zu der zweiten Seite bis zu einer Tiefe t von 20% ≤ t ≤ 80% der Dicke d, die das Trägersubstrat in dem Randbereich aufweist. Vorzugsweise beträgt die Tiefe t 30% ≤ t ≤ 50% der Dicke d. Innerhalb dieser Bereiche wird einerseits eine Verbindung zwischen Gehäuseteil und Trägersubstrat mit ausreichend hoher Festigkeit erzielt, auf der anderen Seite wird der Energieeintrag beim Schweißen niedrig gehalten und das Trägersubstrat bleibt zumindest abschnittsweise in seiner ursprünglichen Struktur erhalten.

Gemäß einer Weiterbildung ist der mit der Schweißverbindung verbundene Gehäuseabschnitt des Gehäuseteils überlappend mit dem Randbereich des Trägersubstrats und auf der ersten Seite des Trägersubstrats angeordnet, insbesondere liegt der Gehäuseabschnitt in dem Überlappungsbereich flächig an dem Randbereich des Trägersubstrats an. Durch eine derartige Ausgestaltung wird die mechanische Stabilität der Schweißverbindung zwischen Gehäuseteil und Trägersubstrat erhöht sowie gleichzeitig die Durchführung des Schweißvorgangs erleichtert.

Gemäß einer Weiterbildung erstreckt sich die Schweißzone in Dickenrichtung vollständig durch das Gehäuseteil und nur zum Teil in das Trägersubstrat hinein. Insbesondere erstreckt sich die Schweißzone im Wesentlichen senkrecht zu der Haupterstreckungsebene des Trägersubstrats bzw. entlang der Dickenrichtung. Diese Art der Schweißverbindung ist bei einer überlappenden Anordnung zwischen Gehäuseteil und Randbereich des Trägersubstrats besonders einfach im Überlappungsbereich herstellbar. Gemäß einer Weiterbildung ist die Schweißzone an dem Rand des Trägersubstrats und/oder an dem Rand des Gehäuseteils ausgebildet und erstreckt sich in Dickenrichtung nur durch einen Teil der Dicke des Gehäuseteils. Insbesondere erstreckt sie sich in Dickenrichtung bis zu einer Tiefe T von 20% ≤ T ≤ 80% der Dicke des Gehäuseteils in dem zu verbindenden Bereich, vorzugsweise beträgt die Tiefe T 30% ≤ T ≤ 50% dieser Dicke. Auf diese Weise kann der Energieeintrag beim Schweißen besonders niedrig gehalten werden, wodurch das Risiko eines Verzugs der Bauteile noch weiter reduziert wird.

Gemäß einer Weiterbildung ist das Gehäuseteil rahmenförmig ausgebildet und erstreckt sich umlaufend um den Randbereich des Trägersubstrats. Auf diese Weise werden eine umlaufend gasdichte Anbindung der Trägersubstrat-Anordnung, deren mechanische Halterung sowie deren elektrische Kontaktierung in zuverlässiger und mechanisch belastbarer Weise gewährleistet. Gemäß einer Weiterbildung ist das Gehäuseteil ein mit Gasdurchtrittsöffnungen versehenes Rahmenblech, wobei das Rahmenblech im Bereich seines äußeren Randes mit einem Interkonnektor verbunden ist, wobei es sich insbesondere um eine gasdichte Verbindung handelt (z.B. Schweißverbindung, ggf. auch mit einem Überlappungsbereich zwischen Rahmenblech und Interkonnektor). Die Gasdurchtrittsöffnungen dienen dabei zur Zu- und Abfuhr der Prozessgase. Der Interkonnektor, der ebenfalls Teil des Gehäuses ist, ist in dem Stack zwischen jeweils zwei übereinander angeordneten Trägersubstrat-Anordnungen, die jeweils eine elektrochemische Zelle aufweisen, angeordnet. Er bewerkstelligt mittels einer beidseitig ausgebildeten Struktur (z.B. noppen- rippen- oder wellenförmig) beidseitig die Zu- und Abführung der Prozessgase über im Wesentlichen die gesamte Fläche der elektrochemischen Zelle bzw. des zentralen Bereichs des Trägersubstrats. Ferner werden über ihn benachbarte Trägersubstrat-Anordnungen, die jeweils eine elektrochemische Zelle aufweisen, elektrisch in Serie miteinander kontaktiert. Vorzugsweise wird auch der Interkonnektor durch ein entsprechend geformtes, metallisches Blechteil gebildet. Ein gasdichter Gasraum auf der einen Seite des Elektrolyten, insbesondere auf der dem zugehörigen Trägersubstrat zugewandten Seite, wird also dadurch geschaffen, dass die Trägersubstrat-Anordnung umlaufend und gasdicht an das rahmenförmige Gehäuseteil angebunden ist und das rahmenförmige Gehäuseteil wiederum umlaufend und gasdicht an den Interkonnektor angebunden ist. Das heißt, durch das rahmenförmige Gehäuseteil und durch den Interkonnektor wird eine Art Gehäuse gebildet und so ein gasdichter Prozessgasraum realisiert. Die Abdichtung sowie die Bewerkstelligung der jeweils gewünschten Gasführung im Bereich der Gasdurchtrittsöffnungen wird typischerweise durch separate Einleger, Dichtungen sowie die gezielte Auftragung von Dichtmasse (z.B. Glaslot) erzielt.

Eine zweite Alternative besteht darin, das Trägersubstrat direkt an den Interkonnektor, der ja ebenfalls ein Gehäuseteil bildet und entsprechend den oberhalb bzgl. des Interkonnektors beschriebenen Merkmalen ausgebildet sein kann, gasdicht anzubinden. Bei dieser Variante würde der entsprechend größer ausgebildete Randbereich des Trägersubstrats die oben beschriebene Funktion des rahmenförmigen Gehäuseteils mit übernehmen, insbesondere würde sich der gasdichte Oberflächenabschnitt von dem Schichtaufbau bis zu der Schweißverbindung, durch welche der Randbereich mit dem Interkonnektor (Gehäuseteil) verbunden ist, erstrecken. Vorzugsweise wären in dem Randbereich auch die Gasdurchtrittsöffnungen vorgesehen, die z.B. mittels Stanzen, Schneiden, Prägen oder vergleichbarer Verfahren in den Randbereich eingebracht werden. Vorzugsweise werden auch die innerhalb des Trägersubstrats ausgebildeten (z.B. zylindrischen) Wände der Gasdurchtrittsöffnungen gasdicht ausgebildet. Insbesondere grenzen die gasdichten Wände der Gasdurchtrittsöffnungen gasdicht an den gasdichten Oberflächenabschnitt, der ja umlaufend um die Gasdurchtrittsöffnungen ausgebildet ist, gasdicht an, wodurch eine Prozessgasführung ohne Leckage gewährleistet wird. Eine gasdichte Ausbildung der Wände der Gasdurchtrittsöffnungen wird beispielsweise dadurch erreicht, dass diese Gasdurchtrittsöffnungen mittels thermischer Prozesse, wie Laser-, Elektronen-, Ionen-, Wasserstrahl- oder Reibschneiden eingebracht werden, denn diese Prozesse führen zu einem oberflächlichen Aufschmelzen des Trägersubstratmaterials, wodurch nach Erstarren ein sich oberflächlich entlang der Wände erstreckender, gasdichter Abschnitt, der eine Schmelzphase des Trägersubstratmaterials aufweist, insbesondere der vollständig aus einer Schmelzphase des Trägersubstratmaterials gebildet wird, erhalten wird.

Eine dritte Variante besteht darin, dass der Randbereich des Trägersubstrats in der oberhalb dargestellten Art und Weise mit Gasdurchtrittsöffnungen versehen ist und außerhalb der Gasdurchtrittsöffnungen umlaufend und gasdicht an ein rahmenförmiges Gehäuseteil angebunden ist. Das rahmenförmige Gehäuseteil ist dann, wie oberhalb in Bezug auf die erste Variante beschrieben, umlaufend und gasdicht an einen Interkonnektor angebunden.

Gemäß einer Weiterbildung weist der gasdichte Oberflächenabschnitt einen Elektrolyten auf, der Teil des Schichtaufbaus ist und sich über den Schichtaufbau hinausgehend auf der ersten Seite des Trägersubstrats erstreckt. Insbesondere erstreckt er sich bis zu der Schweißverbindung.

Typischerweise weist er eine Dicke im Bereich von 2-10 µm, bevorzugt von 3-5 µm, auf. Er kann sich auch über die Schweißverbindung hinaus, insbesondere bis zu einem äußeren Rand des Trägersubstrats, erstrecken (der Wärmeübergang während des Herstellens der Schweißverbindung wird durch den Elektrolyten bei dem angegebenen Dickenbereich von 3-5 µm nicht merklich beeinflusst). Indem der Elektrolyt die erforderlichen, gasdichten Eigenschaften aufweist und für die Realisierung des Schichtaufbaus benötigt wird, ist es vorteilhaft, ihn für die Realisierung des gesamten oder auch nur eines Teils des gasdichten Oberflächenabschnitts einzusetzen.

Gemäß einer Weiterbildung weist der gasdichte Oberflächenabschnitt einen oberflächlichen, aus dem Trägersubstratmaterial gebildeten, gasdichten Abschnitt des Trägersubstrats, der eine Schmelzphase des Trägersubstratmaterials aufweist, auf. Dies wird insbesondere mittels eines Oberflächennachbehandlungsschrittes erreicht, der zur Bildung einer Schmelzphase aus dem Material des Trägersubstrats in einem oberflächennahen Bereich des Trägersubstrats führt. Ein solcher Oberflächennachbehandlungsschritt kann durch lokales, oberflächliches Aufschmelzen des porösen Trägersubstratmaterials, d.h. kurzes lokales Erhitzen auf eine Temperatur höher als die Schmelztemperatur, erzielt werden und mittels mechanischer, thermischer oder chemischer Verfahrensschritte erfolgen, beispielsweise mittels Schleifen, Strahlen oder durch Applikation von Laser-, Elektronen oder lonenstrahlen. Bevorzugt wird ein die Schmelzphase aufweisender, oberflächlicher Abschnitt durch Einwirken gebündelter Strahlen von hochenergetischen Photonen, Elektronen, Ionen oder anderer geeigneter fokussierbarer Energiequellen auf die Oberfläche des Randbereichs bis in eine bestimmte Einwirktiefe erzielt. Durch das lokale Aufschmelzen und rasche Abkühlen nach dem Aufschmelzen bildet sich in diesem Bereich ein verändertes metallisches Gefüge mit verschwindender bzw. äußerst geringer Restporosität. Dieses veränderte Gefüge, das eine Schmelzphase aufweist, ist gut von demjenigen des Trägersubstrats, das sich durch eine Sinterstruktur auszeichnet, unterscheidbar, beispielsweise in einer lichtmikroskopischen oder REM-Aufnahme (REM: Rasterelektronenmikroskop) eines Schliffbildes einer entlang der Dickenrichtung ausgebildeten Schnittfläche durch das Trägersubstrat. Das Aufschmelzen kann ein einziges Mal oder auch mehrmals hintereinander erfolgen. Die Aufschmelztiefe ist dabei an das Erfordernis der Gasdichtheit anzupassen, eine Aufschmelztiefe von mindestens 1 µm, insbesondere von einschließlich 15 µm bis einschließlich 50 µm, besonders bevorzugt von einschließlich 20 µm bis einschließlich 40 µm, hat sich als geeignet herausgestellt. Der die Schmelzphase aufweisende, oberflächliche Abschnitt erstreckt sich daher von der Oberfläche des Trägersubstrats gemessen um diese Aufschmelztiefe in das Trägersubstrat hinein. In dem die Schmelzphase aufweisenden, oberflächlichen Abschnitt können neben der Schmelzphase noch andere Phasen vorliegen, beispielsweise amorphe Strukturen. Besonders bevorzugt ist der die Schmelzphase aufweisende, oberflächliche Abschnitt vollständig aus der Schmelzphase des Trägersubstratmaterials gebildet. Der Aufschmelzprozess führt zu einer sehr glatten Oberfläche von geringer Oberflächenrauhigkeit. Dies erlaubt eine gute Beschichtbarkeit für funktionale Schichten wie einer Elektrolytschicht, die sich vorzugsweise ausgehend von dem Schichtaufbau zumindest über einen Teil des die Schmelzphase aufweisenden, oberflächlichen Abschnitts erstreckt. Ein solcher Oberflächennachbehandlungsschritt ist z.B. in der WO 2014/187534 A1 beschrieben.

Gemäß einer Weiterbildung weist der gasdichte Oberflächenabschnitt eine auf das Trägersubstrat aufgebrachte, gasdichte Dichtungsmasse, wie z.B. ein Glaslot, ein Metalllot oder eine anorganische Paste, die ggf. auch erst während des Betriebs des elektrochemischen Moduls aushärtet, auf.

Der gasdichte Oberflächenabschnitt kann auch aus mehreren gasdichten Abschnitten, insbesondere aus einer Kombination eines Elektrolyten, eines oberflächlichen, aus dem Trägersubstratmaterial gebildeten, eine Schmelzphase aufweisenden, gasdichten Abschnittes des Trägersubstrats und/oder einer gasdichten Dichtungsmasse, gebildet werden. Bezogen auf die Haupterstreckungsebene des plattenförmigen Trägersubstrats können diese auch mehrlagig übereinander ausgebildet sein, ggf. können solche Überlappungsbereiche aber auch nur abschnittsweise vorgesehen sein.

Die vorliegende Erfindung betrifft ferner ein Verfahren zum Herstellen eines elektrochemischen Moduls, das nachfolgende Schritte aufweist:
A) Pulvermetallurgisches Herstellen eines porösen, plattenförmigen, metallischen Trägersubstrats, das zumindest in einem zentralen Bereich, der von einem Randbereich umgeben ist, gasdurchlässig ausgebildet ist;
B) Gasdichtes Anbinden eines Schichtaufbaus an mindestens ein metallisches, gasdichtes Gehäuseteil auf einer ersten Seite des Trägersubstrats,
   indem der Schichtaufbau mit mindestens einer elektrochemisch aktiven Schicht in dem zentralen Bereich auf die erste Seite des Trägersubstrats aufgebracht wird,
   indem das mindestens eine metallische, gasdichte Gehäuseteil mit dem Randbereich des Trägersubstrats über eine Schweißverbindung derart verbunden wird, dass sich die Schweißzone ausgehend von der ersten Seite in Dickenrichtung zu einer gegenüberliegenden, zweiten Seite des Trägersubstrats nur durch einen Teil der Dicke des Trägersubstrats erstreckt, und
   indem ein gasdichter Oberflächenabschnitt, der sich von dem Schichtaufbau oberflächlich auf der ersten Seite des Trägersubstrats bis zu der Schweißverbindung erstreckt, ausgebildet wird.

Mit dem erfindungsgemäßen Verfahren sind im Wesentlichen die gleichen Vorteile, wie sie oberhalb in Bezug auf das erfindungsgemäße, elektrochemische Modul beschrieben wurden, erzielbar. Auch die oberhalb in Bezug auf das elektrochemische Modul beschriebenen Weiterbildungen und optionalen, zusätzlichen Merkmale sind im Rahmen des vorliegend beanspruchten Herstellungsverfahrens entsprechend umsetzbar und führen zu den oben genannten Vorteilen. Die im Rahmen des "gasdichten Anbindens" (vgl. Schritt B) durchzuführenden Einzelschritte können dabei in unterschiedlicher Reihenfolge durchgeführt werden. Soll sich der gasdichte Oberflächenabschnitt bis über die Schweißverbindung in Richtung zu dem äußeren Rand des Trägersubstrats hinaus erstrecken, so ist der gasdichte Oberflächenabschnitt vorzugsweise auszubilden, bevor das Gehäuseteil mit dem Randbereich des Trägersubstrats über eine Schweißverbindung verbunden wird.

Zur Bestimmung der Porosität der verschiedenen Bereiche des Trägersubstrats werden Querschliffe senkrecht zur Haupterstreckungsebene des plattenförmigen Trägersubstrats angefertigt, indem mittels einer Diamantdrahtsäge Teile aus dem Trägersubstrat herausgesägt, diese Teile in einem Einbettmittel (beispielsweise Epoxidharz) fixiert und nach Aushärtung geschliffen (sukzessive mit jeweils feinerem Schleifpapier) werden. Anschließend werden die Proben mit einer Poliersuspension poliert und final elektrolytisch poliert. Diese Proben werden mittels REM (Rasterelektronenmikroskop) und einem BSE-Detektor (BSE: back-scattered-electrons; deutsch: rückgestreute Elektronen) (BSE-Detektor bzw. 4-Quadranten-Ring-Detektor) analysiert. Als Rasterelektronenmikroskop wurde dabei das Feldemissionsgerät "Ultra Plus 55" der Firma Zeiss verwendet. Die REM-Aufnahme wird innerhalb einer auszuwertenden Messfläche jeweils mittels stereologischer Methoden quantitativ ausgewertet (verwendete Software: "Leica QWin"), wobei darauf geachtet wird, dass innerhalb der auszuwertenden Messfläche ein möglichst homogener Ausschnitt des Teils des Trägersubstrats vorliegt. Im Rahmen der Porositätsmessung wird der Flächenanteil der Poren relativ zu der gesamten, auszuwertenden Messfläche bestimmt. Dieser Flächenanteil entspricht gleichzeitig der Porosität in Vol.-%. Poren. Die nur partiell innerhalb der auszuwertenden Messfläche liegenden Poren werden bei dem Meßverfahren nicht mit berücksichtigt. Für die REM-Aufnahme wurden folgende Einstellungen verwendet: Kippwinkel: 0°, Beschleunigungsspannung von 20 kV, Arbeitsabstand von ca. 10 mm und 250-fache Vergrößerung (Geräteangabe), was in einer horizontalen Bildkante von etwa 600 µm resultiert. Dabei wurde besonderer Wert auf eine sehr gute Bildschärfe gelegt.

Weitere Vorteile und Zweckmäßigkeiten der Erfindung ergeben sich anhand der nachfolgenden Beschreibung von Ausführungsbeispielen unter Bezugnahme auf die beigefügten Figuren, bei denen aus Zwecken der Veranschaulichung der vorliegenden Erfindung die Größenverhältnisse nicht immer maßstabgetreu angegeben sind.

Von den Figuren zeigen:
- Fig. 1:: einen Stack mit zwei elektrochemischen Modulen gemäß der vorliegenden Erfindung im Querschnitt;
- Fig. 2a-2h:: ein mit einem Interkonnektor verbundenes elektrochemisches Modul gemäß der vorliegenden Erfindung im Querschnitt mit jeweils unterschiedlichen Varianten der gasdichten Zone;
- Fig. 3:: ein metallisches Trägersubstrat mit integrierten Gasdurchtrittsöffnungen in perspektivischer Ansicht;
- Fig. 4:: REM-Aufnahme des Randbereichs eines metallischen Trägersubstrats im Querschliff mit oberflächlich aufgeschmolzenem Trägersubstratmaterial;
- Fig. 5a-5b:: REM-Aufnahme der Oberfläche des Randbereichs eines metallischen Trägersubstrats vor (Fig. 5a) und nach (Fig. 5b) dem oberflächlichen Aufschmelzen; und
- Fig. 6a-6b:: lichtmikroskopische Aufnahme von zwei erfindungsgemäßen, elektrochemischen Modulen im Bereich der Schweißzone im Querschliff, einmal mit niedriger (Fig. 6a) und einmal mit höherer (Fig. 6b) Eindringtiefe der Schweißzone.

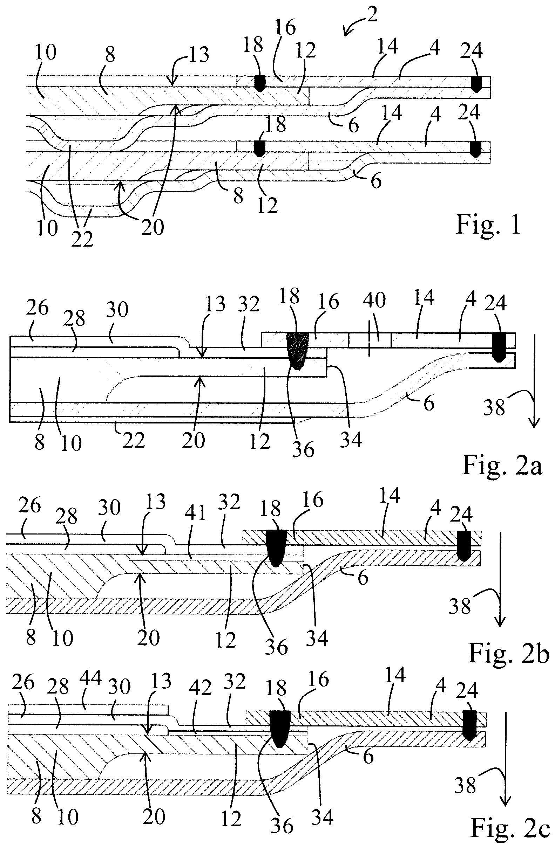

Fig. 1 zeigt in schematischer Darstellung einen Stack (2) mit zwei elektrochemischen Modulen (4) gemäß der vorliegenden Erfindung, die jeweils mit einem Interkonnektor (6) verbunden sind. Die elektrochemischen Module (4) weisen jeweils ein pulvermetallurgisch hergestelltes, poröses, plattenförmiges, metallisches Trägersubstrat (8) mit einem gasdurchlässigen, zentralen Bereich (10) und einem gegenüber dem zentralen Bereich weiter verdichteten Randbereich (12) sowie ein auf eine erste Seite (13) des Trägersubstrats (8) aufgesetztes, metallisches Rahmenblech (14), das im Überlappungsbereich seines inneren Rahmenbereichs (16) mit dem Randbereich (12) des Trägersubstrats (8) über eine umlaufende Schweißverbindung (18) verbunden ist. Der Randbereich (12) weist dabei eine niedrigere Porosität als der zentrale Bereich (10) auf, er ist aber immer noch gasdurchlässig ausgebildet. Auf einer zweiten Seite (20) des Trägersubstrats (8) liegt jeweils der Interkonnektor (6), der in seinem zentralen Bereich eine Rippenstruktur (22) aufweist, an dem Trägersubstrat (8) abschnittsweise an, wobei der Interkonnektor (6) und das Rahmenblech (14) jeweils mit ihren Randbereichen umlaufend aneinander anliegen und über eine Schweißverbindung (24) umlaufend miteinander verbunden sind. Die Blickrichtung in Fig. 1 verläuft dabei entlang der Erstreckungsrichtung der Rippenstruktur (22).

Die Ausbildung des Schichtaufbaus und der gasdichten Zone wird im Folgenden unter Bezugnahme auf die Figur 2a erläutert, die schematisch das mit dem Interkonnektor (6) verbundene, elektrochemische Modul (4) gemäß der vorliegenden Erfindung im Querschnitt und mit höherem Detaillierungsgrad im Bereich des Schichtaufbaus und der gasdichten Zone zeigt (in abweichender Größenrelation als in Fig. 1), diesmal jedoch in Blickrichtung quer zu der Erstreckungsrichtung der Rippenstruktur (22) des Interkonnektors (6). Für übereinstimmende Bauteile werden die gleichen Bezugszeichen wie bei Fig. 1 verwendet. In dem zentralen Bereich (10) ist auf eine erste Seite des Trägersubstrats (8) ein Schichtaufbau (26), der vorliegend eine auf dem Trägersubstrat (8) angeordnete Anode (28) und einen auf der Anode (28) angeordneten Elektrolyt (30) aufweist, aufgebracht, wobei eine typischerweise zwischen Anode (28) und Trägersubstrat (8) vorgesehene Diffusionsbarriereschicht nicht dargestellt ist. Eine sich von dem Schichtaufbau (26) bis zu dem Rahmenblech (14) erstreckende, gasdichte Zone (32) wird dadurch gebildet, dass der gasdichte Elektrolyt (30) über den zentralen Bereich (10) und die Anode (28) hinausgehend auf der ersten Seite (13) entlang der Oberfläche des Trägersubstrats (8) bis in den Überlappungsbereich mit dem Rahmenblech (14) hinaus erstreckt wird (vorliegend sogar bis zu einem äußeren Rand (34) des Trägersubstrats (8)). Durch die Schweißverbindung (18) wird ein umlaufender, gasdichter Übergang von dem Elektrolyt (30) zu dem Rahmenblech (14) hergestellt. Eine Schweißzone (36) der Schweißverbindung erstreckt sich ausgehend von der ersten Seite (13) in Dickenrichtung (38) in Richtung zu der gegenüberliegenden zweiten Seite (20) nur durch einen Teil der Dicke des Trägersubstrats (8). Als Dickenrichtung (38) wird dabei die Richtung senkrecht zu der Haupterstreckungsebene des plattenförmigen Trägersubstrats (8) bezeichnet. In Fig. 2a ferner dargestellt ist eine in dem Rahmenblech (14) ausgebildete Gasdurchtrittsöffnung (40).

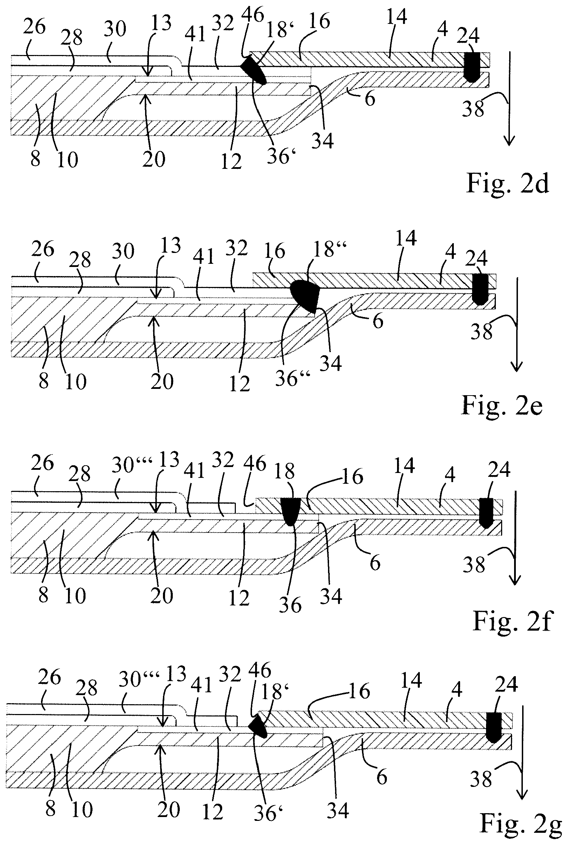

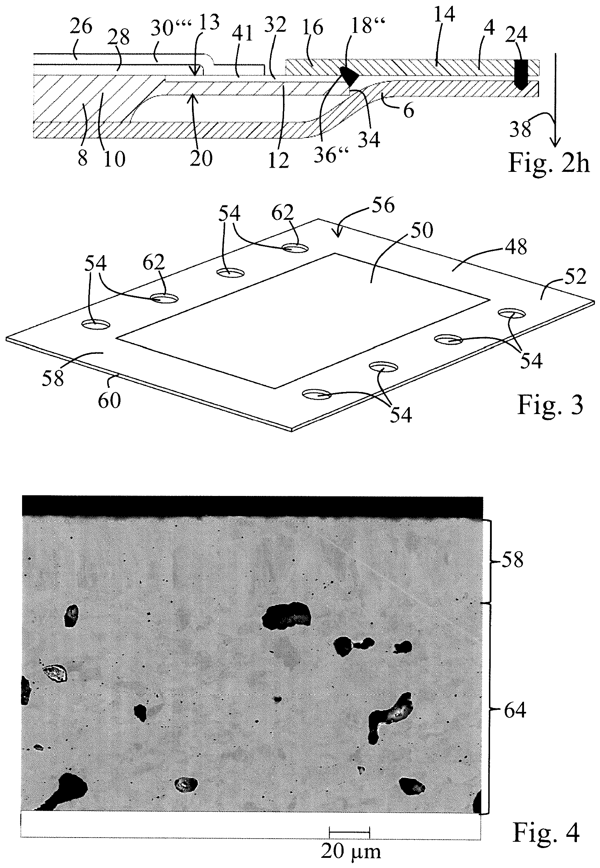

Weitere Ausführungsformen der vorliegenden Erfindung werden im Folgenden unter Bezugnahme auf die Figuren 2b-2h erläutert, wobei die Darstellungsweise weitgehend derjenigen der Fig. 2a entspricht, außer dass die Rippenstruktur (22) des Interkonnektors (6) sowie die Gasdurchtrittsöffnung (40) nicht dargestellt sind. Im Folgenden wird nur auf die unterschiedlichen Varianten der Ausbildung der gasdichten Zone eingegangen, wobei für gleiche Bauteile die gleichen Bezugszeichen verwendet werden und der Aufbau nur insoweit erläutert wird, als Unterschiede gegenüber den Figuren 1a und 2a bestehen. Bei dem Ausführungsbeispiel der Figur 2b ist zusätzlich auf der ersten Seite (13) in dem Randbereich (12) des Trägersubstrats (8) ein oberflächlicher, aus dem Trägersubstratmaterial gebildeter, gasdichter Abschnitt (41) des Trägersubstrats (8), der eine Schmelzphase des Trägersubstratmaterials aufweist, ausgebildet, wobei sich dieser bis zu dem äußeren Rand (34) des Trägersubstrats (8) erstreckt. Dieser oberflächliche, gasdichte Abschnitt (41) wurde durch oberflächliches Aufschmelzen des Trägersubstratmaterials hergestellt. Dementsprechend sind zwei gasdichte Lagen, nämlich der gasdichte Elektrolyt (30) und der oberflächliche, gasdichte Abschnitt (41) übereinander angeordnet. Bei der Ausführungsform der Fig. 2c ist zwischen Elektrolyt (30) und dem Randbereich (12) des Trägersubstrats (8) eine aus einer gasdichten Dichtungsmasse gebildete Dichtungsschicht (42) vorgesehen, die sich ebenfalls bis zu dem äußeren Rand (34) des Trägersubstrats (8) erstreckt. Im Rahmen der Herstellung wird dabei die Dichtungsmasse in dem Randbereich (12) auf die erste Seite (13) des Trägersubstrats (8) vor Auftragen des Elektrolytmaterials (30) aufgebracht. Der gasdichte Elektrolyt (30) und die Dichtungsschicht (42) bilden zwei übereinander ausgebildete, gasdichte Lagen. Eine weitere Abwandlung gegenüber der Figur 2a besteht darin, dass bei dem elektrochemischen Modul der Fig. 2c bereits eine Kathode (44) oberhalb des Elektrolyten (30) vorgesehen ist, wobei eine typischerweise zwischen Elektrolyt (30) und Kathode (44) vorgesehene Diffusionsbarriereschicht nicht dargestellt ist. In Fig. 2d ist in Abwandlung zu Fig. 2b die Schweißzone (36') der Schweißverbindung (18') umlaufend an dem inneren Rand (46) des Rahmenblechs (14) ausgebildet und erstreckt sich in Dickenrichtung (38) nur durch einen Teil der Dicke des Rahmenblechs (14) (und entsprechend auch nur durch einen Teil der Dicke des Trägersubstrats (8)). In Fig. 2e ist in Abwandlung zu Fig. 2b die Schweißzone (36") der Schweißverbindung (18") umlaufend an dem äußeren Rand (34) des Trägersubstrats (8) ausgebildet und erstreckt sich in Dickenrichtung (38) nur durch einen Teil der Dicke des Rahmenblechs (14) (und entsprechend auch nur durch einen Teil der Dicke des Trägersubstrats (8)). In Abwandlung zu Fig. 2b erstreckt sich der Elektrolyt (30"') in Fig. 2f zwar ebenfalls über den zentralen Bereich (10) und die Anode (28) hinausgehend auf der ersten Seite (13) entlang der Oberfläche des Trägersubstrats (8), er endet jedoch vor Erreichen des inneren Randes (46) des Rahmenblechs (14) sowie vor der Schweißverbindung (18). Zusätzlich ist ein oberflächlicher, gasdichter Abschnitt (41), entsprechend wie er in Fig. 2b gezeigt ist, vorgesehen. Dementsprechend sind nur abschnittsweise zwei übereinander angeordnete, gasdichte Lagen vorgesehen. In Fig. 2g ist die gleiche Abwandlung, wie sie in Bezug auf Fig. 2f erläutert wurde, vorgesehen, jedoch als Abwandlung gegenüber der Fig. 2d. In Fig. 2h ist die gleiche Abwandlung, wie sie in Bezug auf Fig. 2f erläutert wurde, vorgesehen, jedoch als Abwandlung gegenüber der Fig. 2e. Wie anhand der Fig. 2a bis 2h verdeutlicht wird, bestehen noch weitere Kombinationsmöglichkeiten der Parameter Anzahl und Aufbau des Schichtstapels, Ausbildung des Elektrolyten, Ausbildung eines oberflächlichen, gasdichten Abschnittes, Ausbildung einer Dichtungsschicht sowie Ausbildung und Platzierung der Schweißzone. Insbesondere können z.B. ein bis drei gasdichte Schichten (Elektrolyt, Dichtungsschicht, oberflächlicher, gasdichter Abschnitt) vorgesehen sein, die sich vollständig oder auch nur teilweise überlappen.

In Fig. 3 ist eine weitere Variante eines pulvermetallurgisch hergestellten, porösen, plattenförmigen, metallischen Trägersubstrats (48) mit einem gasdurchlässigen, zentralen Bereich (50), auf dem ein Schichtstapel aufbringbar ist, und einem gegenüber dem zentralen Bereich weiter verdichteten Randbereich (52) gezeigt. Der Randbereich (52) weist dabei eine niedrigere Porosität als der zentrale Bereich (50) auf, er ist aber immer noch gasdurchlässig ausgebildet. Im Randbereich (52) sind jeweils entlang zweier, einander gegenüberliegender Seiten Gasdurchtrittsöffnungen (54), die sich jeweils durch den Randbereich (52) hindurch erstrecken, vorgesehen. Auf der ersten, d.h. dem aufzubringenden Schichtstapel zugewandten Seite (56) ist ein oberflächlicher, aus dem Trägersubstratmaterial gebildeter, gasdichter Abschnitt (58) des Trägersubstrats (48), der eine Schmelzphase des Trägersubstratmaterials aufweist, ausgebildet, wobei sich dieser bis zu dem äußeren Rand (60) des Trägersubstrats (48) erstreckt. Dieser oberflächliche, gasdichte Abschnitt (58) wurde durch oberflächliches Aufschmelzen des Trägersubstratmaterials hergestellt. Auch die zylindrischen Wände (62) der Gasdurchtrittsöffnungen (54) sind gasdicht ausgebildet, was beispielsweise durch eine Einbringung derselben mittels Laserschneiden erzielbar ist. Die Wände (62) grenzen gasdicht an den oberflächlichen, gasdichten Abschnitt (58) an.

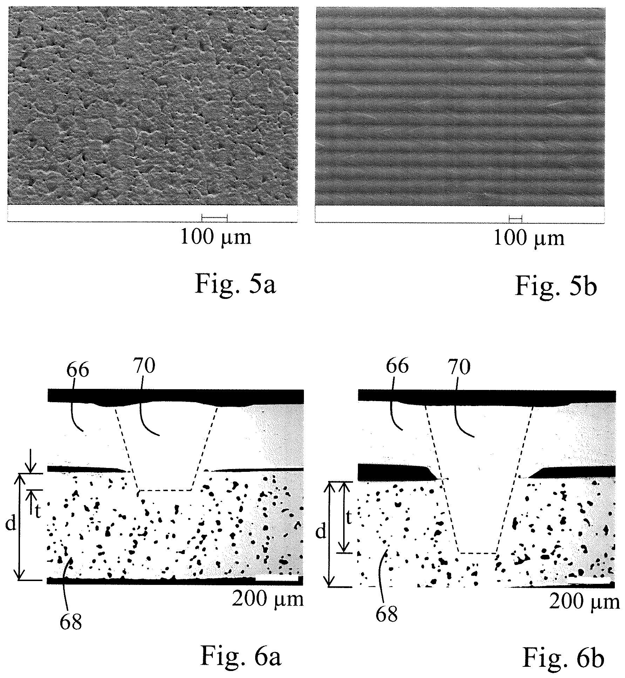

Ein z.B. mittels Laserbearbeitung hergestellter, oberflächlicher, gasdichter Abschnitt (58) ist anhand der Gefügestruktur (vorliegend: Schmelzphase) sowie anhand des Porositätsunterschieds von dem darunter liegenden, porösen Abschnitt (64) unterscheidbar, wie anhand der REM-Aufnahme der Fig. 4 ersichtlich ist. Anhand der REM-Aufnahmen der Figuren 5a und 5b von der Oberfläche eines pulvermetallurgisch hergestellten und vorverdichteten Randbereichs vor (Fig. 5a) und nach (Fig. 5b) der Laserbearbeitung zur Herstellung des oberflächlichen, gasdichten Abschnitts ist erkennbar, dass die Oberflächenrauheit erheblich reduziert wird, was auch zu verbesserten Haftungseigenschaften des Elektrolyten oder auch einer Dichtungsschicht führt. In den Fig. 6a und 6b ist jeweils der Ausschnitt der Schweißverbindung zwischen einem Rahmenblech (66) und einem porösen, pulvermetallurgischen Trägersubstrat (68) im Querschliff gezeigt. Die Schweißzone (70) der Schweißverbindung erstreckt sich einmal bis zu einer Tiefe t von ca. 20% (Fig. 6a) und einmal bis zu einer Tiefe t von ca. 70% (Fig. 6b) der Dicke d des Trägersubstrats (68) in dem betreffenden Bereich (mit einer Schwankungsbreite von ca. ± 5%). Die Schweißparameter für die Schweißverbindung der Fig. 6a betrugen P=550W, z_{f}=0mm, Ø_{Faser}=400µm, Ø_{Spot}=400µm, vₛ=4m/min (min: Minute), diejenigen für Fig. 6b betrugen P=600W, z_{f}=0mm, Ø_{Faser}=400µm, Ø_{Spot}=400µm, vₛ=4m/min, wobei mit P die Laserleistung, mit z_{f} die Fokuslage, mit Ø_{Faser} der Faserdurchmesser, mit Ø_{Spot} der Spotdurchmesser und mit vₛ die Strahlgeschwindigkeit bezeichnet werden.

### Herstellungsbeispiel:

Ein Trägersubstrat wurde aus entsprechenden Ausgangspulvern mit einer Gesamtzusammensetzung und Partikelgröße, wie es oberhalb im Zusammenhang mit der AT 008 975 U1 angegeben ist, auf pulvermetallurgischen Weg (d.h. umfassend die Schritte des Pressens des Ausgangspulvers und des Sinterns) hergestellt. Das Trägersubstrat wies danach eine Dicke von 0,8 mm und eine Porosität von ca. 45 Vol.% auf. Nach dem Sinterprozess und dem Zuschnitt auf das gewünschte Format wird das Substrat mit Hilfe einer uniaxialen Presse mit bis zu 1500t Presskraft in dem umlaufenden Randbereich komprimiert. Dieser verdichtete Randbereich weist nach diesem Prozessschritt eine Restporosität von 8 Vol.% auf. Im Anschluss an die Verpressung wird mit Hilfe eines Scheibenlasers und einer darauf abgestimmten 3D Laseroptik dieser Randbereich auf der ersten Seite oberflächlich aufgeschmolzen. Als Parameter für diesen Bearbeitungsschritt wurde eine Laserleistung von 150W bei einer Strahlgeschwindigkeit von 400 mm/s bei einem Spotdurchmesser von 150µm verwendet. Die zu bearbeitende Fläche (vorliegend: die gesamte Oberfläche des Randbereichs auf der ersten Seite) wird mäanderförmig abgefahren, sodass diese vollflächig bearbeitet wird. Es erfolgt dann das Aufbringen einer Diffusionsbarriereschicht bestehend aus Cer-Gadolinium-Oxid mittels eines PVD-Prozesses, wie zum Beispiel Magnetronsputtern. Nach diesem Behandlungsschritt wird die für die elektrochemisch aktive Zelle (im Brennstoffzellenbetrieb) notwendige Anode aus einem Komposit bestehend aus Nickel und mit Yttriumoxid vollstabilisierten Zirkoniumdioxid über Siebdrucken aufgebracht. Die mehrschichtige gradierte Anode endet dabei auf dem oberflächlich aufgeschmolzenen Randbereich des Trägersubstrats, so dass ein Überlappungsbereich gebildet wird. Durch einen Sinterschritt unter reduzierender Atmosphäre und T >1000°C wird die Anode gesintert. Anschließend wird darauf die Elektrolytschicht aus Yttriumoxid vollstabilisierten Zirkoniumdioxid vollflächig über einen PVD Prozess (Gas-Fluss-Sputtern) aufgebracht. Zusätzlich ist für die Verwendung von gemischtleitenden Elektrodenwerkstoffen wie zum Beispiel LSCF ((La,Sr)(Co,Fe)O₃) eine Diffusionsbarriere (Cer-Gadolinium-Oxid) notwendig. Diese kann ebenfalls über einen PVD-Prozess sehr dünn aufgebracht werden (z.B. Magnetronsputtern). Nach der Messung der spezifischen Leckrate nach der Differenzdruckmethode wird der Elektrodenwerkstoff LSCF ((La,Sr)(Co,Fe)O₃) aufgebracht. Die geschieht für gewöhnlich ebenfalls über einen Siebdruckschritt. Die notwendige Sinterung der Kathodenschicht erfolgt in-situ bei Inbetriebnahme der elektrochemischen Zelle. Die elektrochemische Zelle ist danach bereit für die Integration in ein Rahmenblech. Dabei wird das beschichtete Trägersubstrat mit Hilfe einer Vorrichtung positioniert. Auf dieses Trägersubstrat wird nun das Rahmenblech mit einem entsprechenden Ausschnitt möglichst spaltfrei auf die (erste) Seite, auf der auch der Schichtstapel angeordnet ist, gespannt. Die umlaufende Schweißnaht wird ebenfalls mit Hilfe der 3D Scanneroptik und einem Scheibenlaser realisiert. Je nach Trägersubstrat- und Rahmenblechdicke muss die Laserleistung entsprechend angepasst werden. Mit den eingestellten Parametern Laserleistung 600W, Spotdurchmesser 400µm und Strahlgeschwindigkeit 4000mm/min lässt sich die elektrochemische Zelle gemäß dieser Anmeldung integrieren.

## Patentansprüche

1. Elektrochemisches Modul (4), aufweisend:
ein poröses, plattenförmiges, metallisches Trägersubstrat (8; 48; 68) aufweisend einen gasdurchlässigen, zentralen Bereich (10; 50) und einen den zentralen Bereich umgebenden Randbereich (12; 52),
einen in dem zentralen Bereich auf einer ersten Seite (13; 56) des Trägersubstrats angeordneten Schichtaufbau (26) mit mindestens einer elektrochemisch aktiven Schicht (28, 30, 44; 30"'),
mindestens ein metallisches, gasdichtes Gehäuseteil (14; 66), das mit dem Randbereich des Trägersubstrats über eine Schweißverbindung (18; 18'; 18") verbunden ist, und
eine sich von dem Schichtaufbau bis zu dem gasdichten Gehäuseteil erstreckende, gasdichte Zone (32),
**dadurch gekennzeichnet,**
**dass** die gasdichte Zone einen gasdichten Oberflächenabschnitt (30; 30"'; 41 ; 42), der sich von dem Schichtaufbau oberflächlich auf der ersten Seite des Trägersubstrats zumindest bis zu der Schweißverbindung erstreckt, und
die Schweißverbindung, durch die der gasdichte Oberflächenabschnitt mit dem Gehäuseteil gasdicht verbunden wird und deren Schweißzone (36; 36'; 36"; 70) sich ausgehend von der ersten Seite in Dickenrichtung (38) zu einer gegenüberliegenden, zweiten Seite (20) des Trägersubstrats nur durch einen Teil der Dicke des Trägersubstrats erstreckt,
aufweist.

2. Elektrochemisches Modul gemäß Anspruch 1, **dadurch gekennzeichnet, dass** das Trägersubstrat (8; 48; 68) unterhalb des gasdichten Oberflächenabschnitts (30; 30"'; 41; 42) und unterhalb der Schweißzone (36; 36'; 36"; 70) der Schweißverbindung (18; 18'; 18") porös ausgebildet ist, wobei mit "unterhalb" die Richtung zu der zweiten Seite hin bezeichnet wird.

3. Elektrochemisches Modul gemäß Anspruch 2, **dadurch gekennzeichnet, dass** das Trägersubstrat (8; 48; 68) in dem porösen Abschnitt (64) des Randbereichs (12; 52) eine Porosität aufweist, die gegenüber der Porosität des zentralen Bereichs (10; 50) reduziert ist.

4. Elektrochemisches Modul gemäß einem der vorangehenden Ansprüche, **dadurch gekennzeichnet, dass** das Trägersubstrat (8; 48; 68) aus einer auf Cr (Chrom) und/oder Fe (Eisen) basierten Materialkombination pulvermetallurgisch in einem Stück hergestellt ist.

5. Elektrochemisches Modul gemäß einem der Ansprüche 2 bis 4, **dadurch gekennzeichnet, dass** das Trägersubstrat (8; 48; 68) in dem porösen Abschnitt (64) des Randbereichs (12; 52) eine Porosität in dem Bereich von einschließlich 3% bis einschließlich 20% aufweist.

6. Elektrochemisches Modul gemäß einem der vorangehenden Ansprüche, **dadurch gekennzeichnet, dass** sich die Schweißzone (36; 36'; 36"; 70) von der ersten Seite (3; 56) in Dickenrichtung (38) zu der zweiten Seite (20) bis zu einer Tiefe t von 20% < t < 80% der Dicke d, die das Trägersubstrat (8; 48; 68) in dem Randbereich (12; 52) aufweist, erstreckt.

7. Elektrochemisches Modul gemäß einem der vorangehenden Ansprüche, **dadurch gekennzeichnet, dass** der mit der Schweißverbindung (18; 18'; 18") verbundene Gehäuseabschnitt (16) des Gehäuseteils (14; 66) überlappend mit dem Randbereich (12; 52) des Trägersubstrats (8; 48; 68) und auf der ersten Seite (13; 56) des Trägersubstrats angeordnet ist.

8. Elektrochemisches Modul gemäß einem der vorangehenden Ansprüche, **dadurch gekennzeichnet, dass** sich die Schweißzone (36; 70) in Dickenrichtung (38) vollständig durch das Gehäuseteil (14; 66) und nur zum Teil in das Trägersubstrat (8; 48; 68) hinein erstreckt.

9. Elektrochemisches Modul gemäß einem der Ansprüche 1 bis 7, **dadurch gekennzeichnet, dass** die Schweißzone (36'; 36") an dem Rand (34) des Trägersubstrats (8) und/oder an dem Rand (46) des Gehäuseteils (14) ausgebildet ist und sich in Dickenrichtung (38) nur durch einen Teil der Dicke des Gehäuseteils erstreckt.

10. Elektrochemisches Modul gemäß einem der vorangehenden Ansprüche, **dadurch gekennzeichnet, dass** das Gehäuseteil (14) rahmenförmig ausgebildet ist und sich umlaufend um den Randbereich (12) des Trägersubstrats (8) erstreckt.

11. Elektrochemisches Modul gemäß einem der vorangehenden Ansprüche, **dadurch gekennzeichnet, dass** das Gehäuseteil (14) ein mit Gasdurchtrittsöffnungen (40) versehenes Rahmenblech ist, wobei das Rahmenblech im Bereich seines äußeren Randes (60) mit einem Interkonnektor verbunden ist.

12. Elektrochemisches Modul gemäß einem der vorangehenden Ansprüche, **dadurch gekennzeichnet, dass** der gasdichte Oberflächenabschnitt einen Elektrolyten (30; 30''') aufweist, der Teil des Schichtaufbaus (26) ist und sich über den Schichtaufbau hinausgehend auf der ersten Seite (3) des Trägersubstrats (8) erstreckt.

13. Elektrochemisches Modul gemäß einem der vorangehenden Ansprüche, **dadurch gekennzeichnet, dass** der gasdichte Oberflächenabschnitt einen oberflächlichen, aus dem Trägersubstratmaterial gebildeten, gasdichten Abschnitt (41) des Trägersubstrats (8), der eine Schmelzphase des Trägersubstratmaterials aufweist, aufweist.

14. Elektrochemisches Modul gemäß einem der vorangehenden Ansprüche, **dadurch gekennzeichnet, dass** der gasdichte Oberflächenabschnitt eine auf das Trägersubstrat (8) aufgebrachte, gasdichte Dichtungsmasse (42) aufweist.

15. Verfahren zum Herstellen eines elektrochemischen Moduls (4), **gekennzeichnet durch** nachfolgende Schritte:
A) Pulvermetallurgisches Herstellen eines porösen, plattenförmigen, metallischen Trägersubstrats (8; 48; 68), das zumindest in einem zentralen Bereich (10; 50), der von einem Randbereich (12; 52) umgeben ist, gasdurchlässig ausgebildet ist;
B) Gasdichtes Anbinden eines Schichtaufbaus (26) an mindestens ein metallisches, gasdichtes Gehäuseteil (14; 66) auf einer ersten Seite (13; 56) des Trägersubstrats,
indem der Schichtaufbau mit mindestens einer elektrochemisch aktiven Schicht (28, 30, 44; 30"') in dem zentralen Bereich auf die erste Seite des Trägersubstrats aufgebracht wird,
indem das mindestens eine metallische, gasdichte Gehäuseteil mit dem Randbereich des Trägersubstrats über eine Schweißverbindung (18; 18'; 18") derart verbunden wird, dass sich die Schweißzone (36; 36'; 36"; 70) ausgehend von der ersten Seite in Dickenrichtung (38) zu einer gegenüberliegenden, zweiten Seite (20) des Trägersubstrats nur **durch** einen Teil der Dicke des Trägersubstrats erstreckt, und indem ein gasdichter Oberflächenabschnitt (30; 30"'; 41 ; 42), der sich von dem Schichtaufbau oberflächlich auf der ersten Seite des Trägersubstrats bis zu der Schweißverbindung erstreckt, ausgebildet wird.

## Claims

1. Electro-chemical module (4), having:
a porous plate-shaped metallic carrier substrate (8; 48; 68) having a gas-permeable central region (10; 50) and a peripheral region (12; 52) surrounding the central region;
a layered construction (26) having at least one electro-chemically active layer (28, 30, 44; 30"'), which layered construction (26) is disposed in the central region on a first side (13; 56) of the carrier substrate;
at least one metallic gas-tight housing part (14; 66) which by way of a welded connection (18; 18'; 18") is connected to the peripheral region of the carrier substrate; and
a gas-tight zone (32) extending from the layered construction up to the gas-tight housing part;
**characterized in**
**that** the gas-tight zone has
a gas-tight surface portion (30; 30"'; 41; 42) which extends superficially from the layered construction on the first side of the carrier substrate at least up to the welded connection;
and the welded connection by which the gas-tight surface portion is connected in a gas-tight manner to the housing part and the welding zone (36; 36'; 36"; 70) of which, proceeding from the first side, in the thickness direction (38) extends only through part of the thickness of the carrier substrate to an opposite second side (20) of the carrier substrate.

2. Electro-chemical module according to Claim 1, **characterized in that** the carrier substrate (8; 48; 68) below the gas-tight surface portion (30; 30"'; 41; 42) and below the welding zone (36; 36'; 36"; 70) of the welded connection (18; 18'; 18") is configured so as to be porous, wherein "below" designates the direction towards the second side.

3. Electro-chemical module according to Claim 2, **characterized in that** the carrier substrate (8; 48; 68) in the porous portion (64) of the peripheral region (12; 52) has a porosity which in relation to the porosity of the central region (10; 50) is reduced.

4. Electro-chemical module according to any one of the preceding claims, **characterized in that** the carrier substrate (8; 48; 68) is integrally manufactured in one piece by powder metallurgical means from a material combination which is based on Cr (chromium) and/or Fe (iron).

5. Electro-chemical module according to any one of Claims 2 to 4, **characterized in that** the carrier substrate (8; 48; 68) in the porous portion (64) of the peripheral region (12; 52) has a porosity in the range of 3% to 20% (both inclusive).

6. Electro-chemical module according to any one of the preceding claims, **characterized in that** the welding zone (36; 36'; 36"; 70) extends from the first side (13; 56) in the thickness direction (38) to the second side (20) up to a depth t of 20% ≤ t ≤ 80% of the thickness d which the carrier substrate (8; 48; 68) has in the peripheral region (12; 52).

7. Electro-chemical module according to any one of the preceding claims, **characterized in that** that housing portion (16) of the housing part (14; 66) that is connected by the welded connection (18; 18'; 18") is disposed so as to overlap the peripheral region (12; 52) of the carrier substrate (8; 48; 68), and disposed on the first side (13; 56) of the carrier substrate.

8. Electro-chemical module according to any one of the preceding claims, **characterized in that** the welding zone (36; 70) in the thickness direction (38) extends completely through the housing part (14; 66) and only partially into the carrier substrate (8; 48; 68).

9. Electro-chemical module according to any one of Claims 1 to 7, **characterized in that** the welding zone (36'; 36") is configured on the periphery (34) of the carrier substrate (8) and/or on the periphery (46) of the housing part (14), and in the thickness direction (38) extends only through part of the thickness of the housing part.

10. Electro-chemical module according to any one of the preceding claims, **characterized in that** the housing part (14) is configured in a frame-type manner, extending in an encircling manner around the peripheral region (12) of the carrier substrate (8).

11. Electro-chemical module according to any one of the preceding claims, **characterized in that** the housing part (14) is a sheet-metal frame plate which is provided with gas-passage openings (40), the sheet-metal frame plate in the region of the external periphery (60) thereof being connected to an interconnector.

12. Electro-chemical module according to any one of the preceding claims, **characterized in that** the gas-tight surface portion has an electrolyte (30; 30"') which is part of the layered construction (26) and on the first side (13) of the carrier substrate (8) extends beyond the layered construction.

13. Electro-chemical module according to any one of the preceding claims, **characterized in that** the gas-tight surface portion has a superficial gas-tight portion (41) of the carrier substrate (8), which gas-tight portion (41) is formed from the carrier substrate material and comprises a melt phase of the carrier substrate material.

14. Electro-chemical module according to any one of the preceding claims, **characterized in that** the gas-tight surface portion has a gas-tight sealing compound (42) which is applied on the carrier substrate (8).

15. Method for manufacturing an electro-chemical module (4), the method **characterized by** the following steps:
A) powder metallurgical manufacturing of a porous plate-shaped metallic carrier substrate (8; 48; 68) which at least in a central region (10; 50) which is surrounded by a peripheral region (12; 52) is configured so as to be gas-permeable;
B) gas-tight bonding of a layered construction (26) to at least one metallic gas-tight housing part (14; 66) on a first side (13; 56) of the carrier substrate,
in that the layered construction comprising at least one electro-chemically active layer (28, 30, 44; 30"') in the central region is applied on the first side of the carrier substrate,
in that the at least one metallic gas-tight housing part by way of a welded connection (18; 18'; 18") is connected to the peripheral region of the carrier substrate in such a manner that the welding zone (36; 36'; 36"; 70), proceeding from the first side, in the thickness direction (38) extends only through part of the thickness of the carrier substrate to an opposite second side (20) of the carrier substrate, and in that a gas-tight surface portion (30; 30'''; 41; 42) which extends superficially from the layered construction on the first side of the carrier substrate up to the welded connection is configured.

## Revendications

1. Module électrochimique (4), comprenant :
un substrat support métallique, plaquettaire, poreux (8 ; 48 ; 68) comprenant une zone centrale perméable aux gaz (10 ; 50) et une zone de bord (12 ; 52) entourant la zone centrale,
une structure de couches (26) agencée dans la zone centrale sur un premier côté (13 ; 56) du substrat support, comprenant au moins une couche électrochimiquement active (28, 30, 44 ; 30"'),
au moins une partie de boîtier métallique étanche aux gaz (14 ; 66), qui est reliée avec la zone de bord du substrat support par une liaison par soudage (18 ; 18' ; 18"), et
une zone étanche aux gaz (32) qui s'étend depuis la structure de couches jusqu'à la partie de boîtier étanche aux gaz,
**caractérisé en ce que**
la zone étanche aux gaz comprend une section de surface étanche aux gaz (30 ; 30"' ; 41; 42), qui s'étend superficiellement depuis la structure de couches sur le premier côté du substrat support au moins jusqu'à la liaison par soudage, et
la liaison par soudage, par laquelle la section de surface étanche aux gaz est reliée d'une manière étanche aux gaz avec la partie de boîtier et dont la zone de soudage (36 ; 36' ; 36" ; 70) s'étend à partir du premier côté dans la direction d'épaisseur (38) jusqu'à un deuxième côté opposé (20) du substrat support uniquement au travers d'une partie de l'épaisseur du substrat support.

2. Module électrochimique selon la revendication 1, **caractérisé en ce que** le substrat support (8 ; 48 ; 68) est configuré sous forme poreuse en dessous de la section de surface étanche aux gaz (30 ; 30''' ; 41 ; 42) et en dessous de la zone de soudage (36 ; 36' ; 36" ; 70) de la liaison par soudage (18 ; 18' ; 18"), « en dessous » désignant la direction vers le deuxième côté.

3. Module électrochimique selon la revendication 2, **caractérisé en ce que** le substrat support (8 ; 48 ; 68) dans la section poreuse (64) de la zone de bord (12 ; 52) présente une porosité qui est réduite par rapport à la porosité de la zone centrale (10 ; 50).

4. Module électrochimique selon l'une quelconque des revendications précédentes, **caractérisé en ce que** le substrat support (8 ; 48 ; 68) est fabriqué en une pièce par métallurgie des poudres à partir d'une combinaison de matériaux à base de Cr (chrome) et/ou de Fe (fer).

5. Module électrochimique selon l'une quelconque des revendications 2 à 4, **caractérisé en ce que** le substrat support (8 ; 48 ; 68) dans la section poreuse (64) de la zone de bord (12 ; 52) présente une porosité dans la plage allant de 3 % inclus à 20 % inclus.

6. Module électrochimique selon l'une quelconque des revendications précédentes, **caractérisé en ce que** la zone de soudage (36 ; 36' ; 36" ; 70) s'étend depuis le premier côté (3 ; 56) dans la direction d'épaisseur (38) jusqu'au deuxième côté (20) jusqu'à une profondeur t de 20 % < t < 80 % de l'épaisseur d, qui comprend le substrat support (8 ; 48 ; 68) dans la zone de bord (12 ; 52).

7. Module électrochimique selon l'une quelconque des revendications précédentes, **caractérisé en ce que** la section de boîtier (16) de la partie de boîtier (14 ; 66) reliée avec la liaison par soudage (18 ; 18' ; 18") est agencée en chevauchement avec la zone de bord (12 ; 52) du substrat support (8 ; 48 ; 68) et sur le premier côté (13 ; 56) du substrat support.

8. Module électrochimique selon l'une quelconque des revendications précédentes, **caractérisé en ce que** la zone de soudage (36 ; 70) s'étend dans la direction d'épaisseur (38) entièrement au travers de la partie de boîtier (14 ; 66) et uniquement en partie dans le substrat support (8 ; 48 ; 68).

9. Module électrochimique selon l'une quelconque des revendications 1 à 7, **caractérisé en ce que** la zone de soudage (36' ; 36") est formée sur le bord (34) du substrat support (8) et/ou sur le bord (46) de la partie de boîtier (14), et s'étend dans la direction d'épaisseur (38) uniquement au travers d'une partie de l'épaisseur de la partie de boîtier.

10. Module électrochimique selon l'une quelconque des revendications précédentes, **caractérisé en ce que** la partie de boîtier (14) est configurée en forme de cadre et s'étend en circonférence autour de la zone de bord (12) du substrat support (8).

11. Module électrochimique selon l'une quelconque des revendications précédentes, **caractérisé en ce que** la partie de boîtier (14) est une tôle de cadre munie d'ouvertures de passage de gaz (40), la tôle de cadre étant reliée avec un interconnecteur dans la zone de son bord extérieur (60).

12. Module électrochimique selon l'une quelconque des revendications précédentes, **caractérisé en ce que** la section de surface étanche aux gaz comprend un électrolyte (30 ; 30'''), qui fait partie de la structure de couches (26) et s'étend au-delà de la structure de couches sur le premier côté (3) du substrat support (8).

13. Module électrochimique selon l'une quelconque des revendications précédentes, **caractérisé en ce que** la section de surface étanche aux gaz comprend une section étanche aux gaz (41) du substrat support (8) en surface, formée par le matériau du substrat support, qui comprend une phase fondue du matériau du substrat support.

14. Module électrochimique selon l'une quelconque des revendications précédentes, **caractérisé en ce que** la section de surface étanche aux gaz comprend un matériau d'étanchéité étanche aux gaz (42) appliqué sur le substrat support (8).

15. Procédé de fabrication d'un module électrochimique (4), **caractérisé par** les étapes suivantes :
A) la fabrication par métallurgie des poudres d'un substrat support métallique plaquettaire poreux (8 ; 48 ; 68), qui est configuré sous forme perméable aux gaz au moins dans une zone centrale (10 ; 50), qui est entourée par une zone de bord (12 ; 52) ;
B) la liaison étanche aux gaz d'une structure de couches (26) sur au moins une partie de boîtier métallique étanche aux gaz (14 ; 66) sur un premier côté (13 ; 56) du substrat support,
en ce que la structure de couches comprenant au moins une couche électrochimiquement active (28, 30, 44 ; 30"') est appliquée dans la zone centrale sur le premier côté du substrat support,
en ce que ladite au moins une partie de boîtier métallique étanche aux gaz est reliée avec la zone de bord du substrat support par une liaison par soudage (18 ; 18' ; 18") de telle sorte que la zone de soudage (36 ; 36' ; 36" ; 70) s'étende à partir du premier côté dans la direction d'épaisseur (38) jusqu'à un deuxième côté opposé (20) du substrat support uniquement au travers d'une partie de l'épaisseur du substrat support, et en ce qu'une section de surface étanche aux gaz (30 ; 30"' ; 41 ; 42) qui s'étend superficiellement depuis la structure de couches sur le premier côté du substrat support jusqu'à la liaison par soudage est formée.
